Europäisches Patentamt

European Patent Office·

Office européen des brevets

(19)

(11) Veröffentlichungsnummer: **0 184 059**
**B1**

(12) # EUROPÄISCHE PATENTSCHRIFT

(45) Veröffentlichungstag der Patentschrift:
**17.11.88**

(51) Int. Cl.⁴: **H 01 H 3/22,** H 02 P 7/28

(21) Anmeldenummer: **85114586.2**

(22) Anmeldetag: **16.11.85**

(54) Antrieb für einen Schalter.

(30) Priorität: **03.12.84 CH 5743/84**

(43) Veröffentlichungstag der Anmeldung:
**11.06.86 Patentblatt 86/24**

(45) Bekanntmachung des Hinweises auf die Patenterteilung:
**17.11.88 Patentblatt 88/46**

(84) Benannte Vertragsstaaten:
**CH DE FR LI SE**

(56) Entgegenhaltungen:
**DE - A - 3 031 311**
**DE - B - 1 005 156**
**US - A - 4 086 983**

(73) Patentinhaber: **BBC Brown Boveri AG, Haselstrasse,
CH-5401 Baden (CH)**

(72) Erfinder: **Herzig, Peter, Stritengässli 24, CH-5000 Aarau
(CH)**

**Beschreibung**

Bei der Erfindung wird ausgegangen von einem Antrieb für einen Schalter nach dem Oberbegriff des Anspruchs 1.

Mit diesem Oberbegriff nimmt die Erfindung Bezug auf einen Stand der Technik von Schalterantrieben, wie er in der DE-B-1 005 156 beschrieben ist. Der bekannte Schalterantrieb weist ein von einem Elektromotor aufladbares Schwungrad auf, welches nach Erreichen einer vorgegebenen kinetischen Energie an eine zur Betätigung eines Schalterkontaktes vorgesehene Schaltwelle gekoppelt wird. Hierdurch wird erreicht, dass sich Schaltvorgänge ohne Einsatz hoch übersetzender und daher verschleissanfälliger Getriebe in sicherer Weise ausführen lassen.

In der gemäss Art. 54(3) EPÜ nachveröffentlichten Europäischen Patentanmeldung 162 212 ist ein Schwungradantrieb für einen elektrischen Schalter beschrieben, bei dem das Schwungrad über einen vergleichsweise aufwendigen Permanentmagnetmotor aufgeladen wird. Dieser Antrieb benötigt eine Steuerschaltung zur Erzielung einer schaltvorgangsabhängigen Laufrichtung des Permanentmagnetmotors und zur Schaltung dieses Motors vor einer Betätigung der Schaltwelle von Motor- in Generatorbetrieb. Wird bei diesem Antrieb anstelle eines Permanentmagnetmotors ein Haupt- oder Reihenschlussmotor eingesetzt, so muss beim Umschalten von Motor- in den Generatorbetrieb das Auftreten einer Stromlücke, welche gegebenenfalls die Funktionsfähigkeit der Steuerschaltung wegen des unerwünschten Abfalls von Steuerschützen beeinträchtigt, durch zusätzliche elektrische Hilfsenergiespeicher vermieden werden.

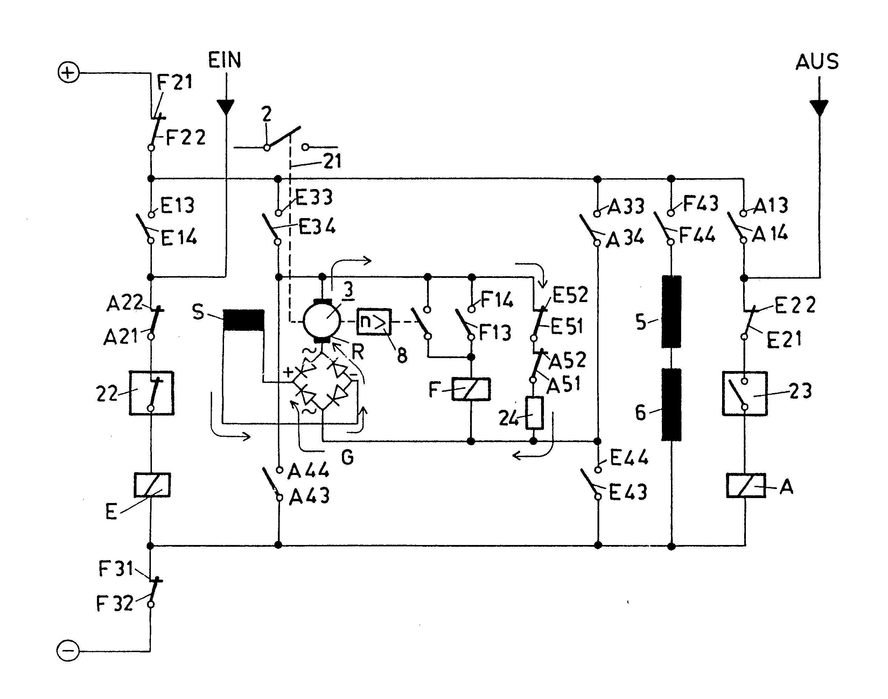

Aus der DE-A-3 031 311, insbesondere Fig. 2, ist es bekannt, in den Pfad des Erregerstromes eines Gleichstrom-Reihenschlussmotors eine Gleichrichterbrücke zu schalten, in deren Brückendiagonale die Erregerwicklung des Motors liegt und an deren verbleibenden Anschlüssen diagonal zueinander eine Ankerklemme des Motors und eine Klemme des speisenden Gleichstroms gelegt sind. Hierdurch wird eine kontaktlose Richtungsschaltung des Erregerstroms erreicht und damit bei elektrischen Fahrzeugen mit Gleichstrom-Reihenschlussmotoren der Übergang vom Fahrbetrieb auf den Bremsbetrieb ohne mechanische Kontaktschaltung ermöglicht.

Durch die Merkmale des kennzeichnenden Teils des Anspruchs 1 wird die Aufgabe gelöst, einen Antrieb der gattungsgemässen Art anzugeben, welcher sich unter Verwendung eines robusten und kostengünstigen Antriebsmotors durch ein hohes Mass an Betriebssicherheit auszeichnet.

Der erfindungsgemässe Antrieb zeichnet sich dadurch aus, dass es auch mit einem als Hauptschlussmotor ausgebildeten Antriebsmotor stets in einfacher und sicherer Weise möglich ist, einen einmal eingeleiteten Schaltvorgang zu Ende zu führen, und dass zusätzliche elektrische Hilfsenergiespeicher, wie Akkumulatoren oder Elektrolytkondensatoren entbehrlich sind.

Weitere vorteilhafte Ausführungsformen der Erfindung sind in den abhängigen Ansprüchen angegeben.

Die Erfindung wird nachfolgend anhand eines in der Zeichnung beschriebenen Ausführungsbeispiels näher erläutert.

Hierbei zeigt die einzige Figur im wesentlichen die Steuerschaltung des erfindungsgemässen Antriebs.

In der Figur ist ein Antriebsmotor 3 dargestellt, welcher starr mit einem nicht dargestellten Schwungrad verbunden ist. Das Schwungrad ist über eine elektromagnetische Kupplung, deren Magnetspule 5 in der Figur dargestellt ist, mit einer lediglich symbolisch dargestellten und auf einen beweglichen Kontakt eines Trennschalters 2 wirkenden Schaltwelle 21 in kraftschlüssiger Weise verbindbar. Der Antriebsmotor 3 ist über ein beim Einschalten des Trennschalters 2 in der kinetischen Ladephase ansprechendes Schütz E mit Kontakten E13/14, E21/22, E33/34, E43/44 und E51/52 und ein beim Ausschalten des Trennschalters 2 ansprechendes Schütz A mit Kontakten A13/14, A21/22, A33/34, A43/44 und A51/52 mit einer Gleichstromquelle verbindbar. Parallel zu den Anschlüssen des Antriebsmotors 3 sind jeweils ein Bremswiderstand 24 und ein Schütz F mit Kontakten F13/14, F21/22, F31/32 und F43/44 angeordnet. Dem Erregerorgan des Schützes F ist ein Fliehkraftschalter 8 vorgeschaltet, welcher bei Überschreiten einer vorgebbaren Auslösedrehzahl des Antriebsmotors 3 betätigt wird. Den Erregerorganen der Schütze E bzw. A sind jeweils Endschalter 22 bzw. 23 vorgeschaltet. In Serie zur Magnetspule 5 der elektromagnetischen Kupplung ist eine auf die Schaltwelle 21 wirkende elektromagnetische Arretierbremse (Wicklung 6) geschaltet, welche vorzugsweise als elektromagnetisch gelüftete Permanentmagnet-Arretierbremse ausgebildet ist.

Der Antriebsmotor 3 ist als Hauptschlussmotor mit in Serie geschalteten Wicklungen ausgebildet. In den Stromweg zwischen Rotorwicklung R und Statorwicklung S ist ein in Graetz- oder Vollwegschaltung ausgeführter Gleichrichter G geschaltet. Dieser Gleichrichter weist vorzugsweise Lawinendioden auf, wodurch er überspannungsgeschützt ist. Der Gleichstromausgang des Gleichrichters G ist mit den Anschlüssen der Statorwicklung S verbunden, während sein Wechselstromeingang zwischen den mit der Statorwicklung S verbindbaren Anschluss der Rotorwicklung R und einen Pol der Gleichstromquelle geschaltet ist.

Die Wirkungsweise dieses Antriebs ist nun wie folgt:

Befindet sich der Trennschalter 2, wie in der Figur angegeben ist, im geöffneten Zustand, so wird der Einschaltvorgang durch Abgabe eines Einschaltbefehls «EIN» eingeleitet. Auf diesen Befehl spricht das Schütz E an und geht über dessen Kontakt E13/14 in Selbsthaltung. Gleichzeitig schliessen die Kontakte E33/34 und E43/44 und öffnen die Kontakte E21/22 und E51/52. Durch das Schliessen der Kontakte E33/34 und E43/44 wird erreicht, dass die Gleichstromquelle über die Kontakte F21/22 und E33/34 bzw. F31/32 und E43/44 auf den Antriebsmotor 3 wirkt und der Schwungradspeicher aufgeladen wird. Durch das Öffnen des Kontaktes E21/22 ist während dieses Ladevorganges eine sichere Gegenbefehlssperre gewährleistet, während durch das Öffnen des Kontaktes E51/52 der Bremswiderstand 24 aus dem Stromweg geschaltet wird.

Sobald eine vorgegebene Auslösedrehzahl des Antriebsmotors 3 und damit des Schwungrades erreicht ist, schliesst der Fliehkraftschalter 8 und wird das Erregerorgan des Schützes F aktiviert, wodurch die Kontakte F13/14 und F43/44 geschlossen und die Kontakte F21/22 und F31/32 geöffnet werden. Durch das Schliessen des Kontaktes F13/14 geht das Schütz F in Selbsthaltung, während durch das Schliessen des Kontaktes F43/44 die Arretierbremse 6 gelöst und die Kupplung 5 betätigt wird, wodurch das Schwungrad nun unmittelbar auf die Schaltwelle des Trennschalters 2 wirkt und dessen Einschalten erzwingt.

Durch das Öffnen der Kontakte F21/22 und F31/32 wird während des Schaltvorganges die Gleichstromquelle vom Antriebsmotor 3 und der Steuerschaltung abgeschaltet, wodurch der Antriebsmotor 3 von Motor- auf Generatorbetrieb umgeschaltet wird. Um diese Umschaltung bei einem Hauptschlussmotor in nichtstromlückender Weise automatisch zu ermöglichen, ist nun in den Stromweg zwischen Rotorwicklung R und Statorwicklung S der Gleichrichter G geschaltet, durch welchen die Stromrichtung in der Statorwicklung S während dieser Umschaltung beibehalten wird. Hierbei wird der Selbstinduktionsstrom der Statorwicklung über die Brückenzweige des Gleichrichters G unabhängig von der Drehrichtung kurzgeschlossen und dabei das bereits beim Motorbetrieb vorhandene Magnetfeld quasistationär aufrechterhalten. Da dieses starke Magnetfeld somit schon beim Abschalten der Gleichstromquelle sofort zur Verfügung steht, kann der als Hauptschlussmotor ausgebildete Antriebsmotor 3 bereits während des Umschaltens von Motor- auf Generatorbetrieb als Generator wirken und nichtlückend Strom zur Versorgung der Steuerschaltung sowie von elektromagnetischer Kupplung 5 und Arretierbremse 6 liefern. Hierdurch wird ein Abfallen der Schütze bzw. das Nichtfunktionieren von Kupplung 5 und Arretierbremse 6 ohne zusätzliche Massnahme wie elektrische Energiespeicher vermieden und kann der Trennschalter 2 in sicherer Weise in die Einschaltstellung eingefahren werden.

Bei der Umschaltung von Motor- in Generatorbetrieb wird der Stromfluss in der Statorwicklung S nicht nur stabilisiert, sondern auch aktiv vom Gleichrichter G erzwungen nach aussen fortgeführt. Der Strom fliesst – wie in der Figur durch Pfeile angegeben ist – von der Statorwicklung S über einen Brückenzweig des Gleichrichters, die Rotorwicklung R, die Kontakte E51/52, A51/52 und einen diagonal versetzten weiteren Brückenzweig des Gleichrichters G zurück zur Statorwicklung S. Durch die Stabilisierung der Stromrichtung wird erreicht, dass die Polarität der Statorwicklung S beibehalten bleibt, während sich in der Rotorwicklung R beim Übergang von Motor- auf Generatorbetrieb (vom Gleichrichter G zwangsgeführt) die Stromrichtung umkehrt. Hierbei tritt die im Motorbetrieb in der Rotorwicklung von der anliegenden Spannung überdeckte Dynamogegenspannung in Erscheinung.

Der Gleichrichter G erzwingt also, dass sich bei der Umschaltung von Motor- und Generatorbetrieb in der Rotorwicklung R die Stromrichtung ändert, dass die Reihenschaltung von Rotorwicklung R und Statorwicklung S nach aussen hin die richtige Polarität aufweist, und dass das Erregungsmagnetfeld wegen der Gleichwertigkeit von Rotorwicklung R und Statorwicklung S nicht zusammenbricht und beim magnetischen Übergewicht des einen sich erneut aufschaukeln muss, sondern dass von vornherein Magnetfeld- und Induktionswicklung definiert sind.

Damit wird der wesentliche Zweck erreicht, dass der Schaltvorgang von vornherein unabhängig von der äusseren Stromversorgung abläuft. Darüber hinaus wird aber auch erreicht, dass die Umpolung von Stator- oder Rotorwicklung automatisch und praktisch trägheitslos vollzogen wird und ein Wicklungs-Umschaltschütz sowie dessen Ansteuerung entfallen können.

Sobald der Trennschalter 2 die Einschaltstellung erreicht hat, öffnet der Endschalter 22 und fällt das Schütz E ab. Durch das damit verbundene Öffnen der Kontakte E33/34 und E43/44 wird der nun als Generator wirkende Antriebsmotor 3 von der elektromagnetischen Kupplung 5 und von der Arretierbremse 6 abgetrennt. Die Kupplung 5 wird entregt und unterbricht die Verbindung vom Schwungrad zur Schaltwelle 21, während die Schaltwelle 21 durch die nun ansprechende Arretierbremse blockiert und der Trennschalter gleichzeitig in seiner Einschaltstellung fixiert wird. Durch das mit dem Abfallen des Schützes E bewirkte Schliessen des Kontaktes E51/52 wird der noch als Generator arbeitende Antriebsmotor 3 über den Bremswiderstand 24 elektrisch stark abgebremst und kinetisch entladen und steht nach einigen Sekunden für den Ausschaltvorgang, der eine entgegengesetzte Motordrehzahl erfordert, zur Verfügung.

Beim Ausschalten wird nach Abgabe eines Ausschaltbefehls «AUS» das Schütz A aktiviert und dadurch der Antriebsmotor 3 über die nun geschlossenen Kontakte A33/34 und A43/44 an die Gleichstromquelle angeschlossen, wodurch der Antriebsmotor 3 eingeschaltet und der Schwungradspeicher aufgeladen wird. Die Kontakte E33/34, E43/44, A33/34 und A43/44 sind derart in einer Brückenschaltung angeordnet, dass die Gleichstromquelle bem Ausschalten mit umgekehrter Polarität auf den Antriebsmotor 3 wirkt, so dass dessen Laufrichtung und damit auch die Laufrichtung des Schwungradspeichers gegenüber der Laufrichtung beim Einschalten gegensinnig wird und der Schwungradspeicher nach dem Aufladevorgang den Trennschalter 2 – entsprechend dem Einschaltvorgang – in sicherer Weise in die Ausschaltstellung führt.

**Patentansprüche**

1. Antrieb für einen Schalter (2) mit
— einer Schaltwelle (21) zum Betätigen eines beweglichen Kontaktes des Schalters (2),
— einem mit der Schaltwelle (21) kuppelbaren und während der Betätigung des beweglichen Kontaktes entladbaren Schwungrad,
— einem Antriebsmotor (3) zum Aufladen des Schwungrades vor der Betätigung des beweglichen Kontaktes, dadurch gekennzeichnet, dass eine Steuerschaltung zur Erzielung einer schaltvorgangsabhängigen Laufrichtung des Antriebsmotors (3) und zur Schaltung des Antriebsmotors (3) von der Betätigung des beweglichen Kontaktes von Motor- in Generatorbetrieb vorgesehen ist, und dass bei einer Ausbildung des Antriebsmotors (3) als Hauptschlussmotor mit in Serie geschalteten Wicklungen in den Stromweg zwischen Rotorwicklung (R) und Statorwicklung (S) ein Gleichrichter (G) geschaltet ist, durch welchen die Stromrichtung in der Statorwicklung (S) während des Umschaltens des Antriebsmotors (3) von Motor- auf Generatorbetrieb beibehalten wird.

2. Antrieb nach Anspruch 1, dadurch gekennzeichnet, dass der Gleichstromausgang des Gleichrichters (G) auf die Anschlüsse der Statorwicklung (S) wirkt, und dessen Wechselstromeingang zwischen einen Anschluss der Rotorwicklung (R) und einen Pol einer den Antriebsmotor (3) während des Motorbetriebes mit Strom versorgenden Gleichstromquelle geschaltet ist.

3. Antrieb nach Anspruch 2, dadurch gekennzeichnet, dass der Gleichrichter (G) eine Brückenschaltung von Lawinendioden aufweist.

**Claims**

1. Drive for a switch (2), comprising
— a switch shaft (21) for actuating a moving contact of the switch (2),
— a flywheel which can be coupled to the switching shaft (21) and can be discharged when the moving contact ist being actuated,
— a drive motor (3) for charging-up the flywheel before actuation of the moving contact, characterised in that a control circuit is provided for achieving a switching-process-dependent direction of rotation of the drive motor (3) and for switching the drive motor (3) before actuation of the moving contact from motor to generator operation, and that, if the drive motor (3) is constructed as a series-wound motor having series-connected windings, a rectifier (G) is connected into the current path between the rotor (R) and stator winding (S), by means of which the direction of current in the stator winding (S) during the switching-over of the drive motor (3) from motor to generator operation is maintained.

2. Drive according to claim 1, characterised in that the direct current output of the rectifier (G) acts on the connections of the stator winding (S) and the alternating-current input of the rectifier (G) is connected between one connection of the rotor winding (R) and one pole of a direct current source which supplies the drive motor (3) with current during motor operation.

3. Drive according to claim 2, characterised in that the rectifier (G) exhibits a bridge circuit of avalanche diodes.

**Revendications**

1. Dispositif d'actionnement pour un commutateur (2), comportant:
— un arbre de commutation (21) pour actionner un contact mobile du commutateur (2);
— un volant pouvant être accouplé à l'arbre de commutation (21) et être déchargé pendant l'actionnement du contact mobile;
— un moteur d'actionnement (3) pour charger le volant avant l'actionnement du contact mobile, caractérisé en ce qu'un circuit de commande est prévu pour obtenir un sens de marche du moteur d'actionnement (3) dépendant de l'opération de commutation et pour commuter le moteur d'actionnement (3), avant l'actionnement du contact mobile, du mode moteur au mode génératrice, et que, lorsque le moteur d'actionnement (3) est un moteur à excitation série comportant des enroulements connectés en série dans le trajet de courant entre l'enroulement de rotor (R) et l'enroulement de stator (S), est prévu un redresseur (G) par lequel le sens du courant dans l'enroulement de stator (S) est conservé pendant la commutation du moteur d'actionnement (3) du mode moteur au mode génératrice.

2. Dispositif d'actionnement suivant la revendication 1, caractérisé en ce que la sortie de courant continu du redresseur (G) agit sur les bornes de l'enroulement de stator (S) et son entrée de courant alternatif est connectée entre une borne de l'enroulement de rotor (R) et un pôle d'une source de courant continu alimentant en courant le moteur d'actionnement (3) pendant le mode moteur.

3. Dispositif d'actionnement suivant la revendication 2, caractérisé en ce que le redresseur (G) comporte un montage en pont de diodes à avalanche.

EIN　AUS

F21　F22

2　21

E13　E14

E33　E34

A33　A34　F43　F44　A13　A14

A22　A21

S　3　n>　F14　F13　E52　E51　A52　A51

5

6

E22　E21

22

R

F　24

23

E

G　A44　A43　E44　E43　A

F31　F32

0184059